(19) Europäisches Patentamt
European Patent Office
Office européen des brevets

(11) Publication number: **0 003 251**
**B1**

(12) **EUROPEAN PATENT SPECIFICATION**

(45) Date of publication of patent specification: **22.08.84**

(21) Application number: **78300717.2**

(22) Date of filing: **01.12.78**

(51) Int. Cl.³: **A 01 N 53/00,** A 01 N 37/34, A 01 N 37/10, A 01 N 25/02

(54) **Insecticidal formulations and process for their preparation.**

(30) Priority: **20.12.77 GB 5297077**

(43) Date of publication of application:
**08.08.79 Bulletin 79/16**

(45) Publication of the grant of the patent:
**22.08.84 Bulletin 84/34**

(84) Designated Contracting States:
**BE CH DE FR GB IT NL SE**

(56) References cited:
**FR-A-2 255 852**
**FR-A-2 315 229**
**FR-A-2 358 207**
**GB-A-1 209 524**
**GB-A-1 413 491**

**CHEMIE INGENIEUR TECHNIK, vol. 41 (1969) WEINHEIM W. SIMM: "Elektrostatische Feinstzerstäubung von Flüssigkeiten" pages 503-7**

**TRANSACTIONS OF THE ASEA, Vol. 9, (1966) St. Joseph S.E. LAW: "Charging Liquid Spray by Electrostatic Induction" pages 501-6**

**The file contains technical information submitted after the application was filed and not included in this specification**

(73) Proprietor: **IMPERIAL CHEMICAL INDUSTRIES PLC**
**Imperial Chemical House Millbank**
**London SW1P 3JF (GB)**

(72) Inventor: **Coffee, Ronald Alan**
**Thursley Copse Farnham Lane**
**Haslemere, Surrey (GB)**
Inventor: **Young, Brian William**
**Crofton Cottage 107, Peppard Road**
**Emmer Green Reading, Berkshire (GB)**
Inventor: **Middleton, Michael Robert**
**22 Walden Avenue**
**Arborfield Cross Reading, Berkshire (GB)**

(74) Representative: **Fawcett, Richard Fennelly et al**
**Imperial Chemical Industries PLC Legal Department: Patents PO Box 6**
**Welwyn Garden City Herts, AL7 1HD (GB)**

(56) References cited:
**Zeitschrift für angewandte Physik, XIII, p. 11-16 (1961)**

**Pesticide Science, 8, p. 243-253 (1977)**

**Perrm: Proceedings 1981, British Crop Protection Conf.-Pests and Diseases, p. 389-395**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 003 251 B1**

**Description**

This invention relates to insecticidal formulations, and more particularly to insecticidal formulations containing permethrin and like insecticides.

Permethrin is a recently discovered (UK Patent 1413491 to the National Research Development Corporation) highly active insecticide of formula:

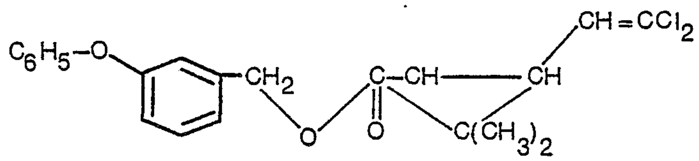

It has a broad spectrum of activity at low rates of application, being particularly effective against *lepidoptera,* and seems likely to be widely used, for example against spruce budworm and pests of cotton. There is a group of related compounds with generally similar properties to permethrin having the general formula:

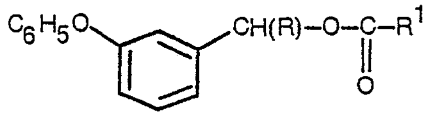

where R is hydrogen or cyano, and $R^1$ is either

(i) a group of formula:

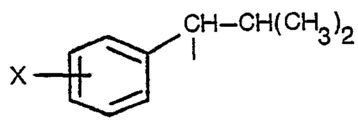

where X is hydrogén, chlorine or methyl; or

(II) a group of formula:

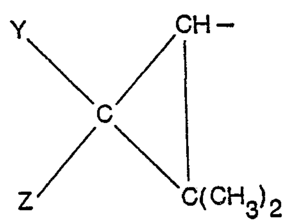

where Y and Z are halogen or methy or Y is hydrogen and Z is methyl or a group of formula:

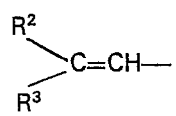

where $R^2$ and $R^3$ are chlorine or bromine. Additionally, at least one of $R^2$ and $R^3$ may be methyl or ethyl, optionally substituted by one or more halogen atoms. This group of insecticides is hereinafter referred to collectively as "permethrin and like compounds."

Permethrin and like compounds, being active at low rates, are well suited to agricultural application by the known ULV (ultra-low volume) technique. This method uses relatively concentrated liquid formulations, containing e.g. 5 to 50% by weight of active ingredient, and a correspondingly low rate of application of the formulation per hectare, e.g. 25—100 litres per hectare, in contrast with more usual high volume spray rates of 200—500 litres per hectare, or more. With such relatively concentrated solutions, it is important to ensure that as much as possible of the formulation goes and stays where it is needed, i.e. on the plants being sprayed, and as little as possible is misdirected onto the ground or carried away by the wind For this purpose, it is useful to apply electrostatically charged sprays. These are attracted to the foliage of plants; electrostatic forces carry them to the underside of leaves as well as to the top surfaces, and even coating is promoted. Hitherto electrostatic spraying of pesticides has not been widely adopted, for lack of convenient, reliable and cheap spraying apparatus. A suitable apparatus is however now available, and is described in UK Patent 1569707. We have also found that ultra-low volume sprays of permethrin and like compounds are biologically more effective in the form of small droplets e.g. below 70$\mu$m in diameter. Such droplets are particularly prone to drift unless electrostatically charged.

It is known from Schultze (Zeitschrift fur angewandte Physik, 1961 (1), Band XIII, pages 11-16) that the behaviour of liquids atomising in an electrostatic field varies according to their conductivities. However Schultze, working with apparatus different from that of UK Patent 1569707, obtains either coarse droplets, or at higher conductivities fine droplets with irregular atomisation; accordingly there is no incentive to adapt his teaching for use in spraying pesticide formulations. The use of pesticide formulations according to the present invention to obtain fine sprays of uniform particle size is not predictable from this reference.

The object of the present invention is to provide a class of insecticidal compositions particularly suited to ULV electrostatic spraying, in particular by the apparatus described in UK Patent 1569707.

According to the present invention we provide an electrostatically sprayable insecticidal formulation suitable for use in an electrostatic spraying apparatus to spray plants to give an even coating of the insecticide on the leaves of said plants, the formulation having a viscosity at 20°C in the range 1 to 50, preferably 5 to 25, centistokes, and capable of producing after spraying a spray droplet size in the range of 50 to 200$\mu$m in diameter, and characterised by comprising a solution of 0.5 to 50% by weight of an insecticide in an inert organic solvent medium, said medium being a mixture of inert solvents optionally containing an antistatic agent, formulated so that the formulation has a resistivity at 20°C of $1 \times 10^6$ to $1 \times 10^{10}$ ohm centimetres, the insecticide being of formula:

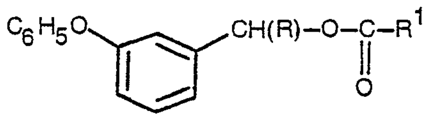

where R is hydrogen or cyano, and $R^1$ is

(i) a group of formula:

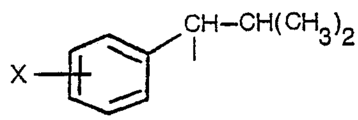

where X is selected from hydrogen, chlorine and methyl, or

(ii) a group of formula:

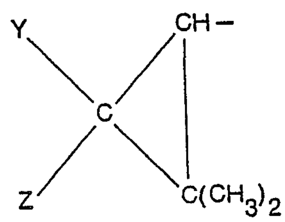

where Y and Z, are halogen or methyl, or Y is hydrogen and Z is methyl or a group of formula $R^2R^3C{=}CH$—, where chlorine, bromine, methyl, ethyl, halo-substituted methyl or halo-substituted ethyl.

In general with higher resistivity values ($10^8$ to $10^{10}$ ohm centimetres), it is preferred to use higher viscosity values, e.g. above 10 centistokes. In this way, lower spray droplet sizes are obtainable.

We find that solutions according to the invention are readily sprayed at satisfactory rates using the apparatus of UK Patent No 1569707 and will give a range of mean spray droplet sizes of from about 50 to 200 $\mu$m in diameter, according to the strength of the electrostatic field applied to them (the stronger the field the smaller the droplets), flow rate through the apparatus and other operating conditions.

The resistivity of solutions according to the invention is conveniently measured by measuring the resistance of a cell of standard dimensions containing the solution held at a temperature of 20°C, using, for example, a Keithley electrometer. It is preferred that the resistivity of the solutions be in the range of $10^6$ to $5 \times 10^8$ ohm centimeters.

The viscosity of solutions according to the invention is conveniently measured by timing the flow of a measured quantity of the solution through a hole of known size (as is done, for example, in the Redwood viscometer). It is preferred that the viscosity of the solutions is in the range 5 to 25 centistokes.

The resistivity and viscosity of the solutions depend primarily on the properties of the solvents used to make them, though they are also affected by the nature and amount of the dissolved insecticide.

One way of obtaining the desired properties is to mix solvents having various resistivities and viscosities. High-boiling hydrocarbon solvents, e.g. 'Solvesso' 150, 'Isopar' L and 'Exsol' D180/220, are

convenient and relatively cheap, but usually have low resistivities (e.g. of the order of $10^{11}$ ohm centimetres). To bring down the resistivity of these materials, they may be mixed with polar solvents such as alcohols and in particular ketonic solvents. These have lower resistivities but are also usually not viscous enough; for example, the useful solvent cyclohexanone has a resistivity of about $2 \times 10^6$ ohm centimetres, but a viscosity of only about 3 centistokes. However the viscosity of the solution may be increased by addition of more viscous oil-soluble solvents, for example polybutenes e.g. 'Hyvis' and long-chain chlorinated hydrocarbon products such as 'Cerechlor' C42 or C48. The latter has a high resistivity, greater than $10^{10}$ ohm centimetres, and a high viscosity, of the order of 100 centistokes. By suitable adjustment of the proportions of three solvents such as these, a solution of the desired properties can easily be obtained.

The resistivity of solvents and solutions is easily affected by the presence of water or other contaminants. It is not necessary always to use ultra-pure materials, but consistent results will only be obtained from materials of consistent composition; and formulations which have been made up with the desired properties should thereafter be protected from any further contamination, especially by water.

An alternative way of producing a solution with the required properties is to make up a solution of the required viscosity but excessive resistivity (e.g. from a mixture of hydrocarbons and long-chain chlorinated hydrocarbons) and then dose this with an antistatic agent to reduce the resistivity to the desired level. A suitable antistatic agent is sold for use as a static charge dissipator with hydrocarbon fuels under the name 'ASA'; it consists of a complex mixture of calcium and chromium cations with various organic acid anions. Other similar materials, e.g. copper oleates, may also be used. This technique is not always suitable by itself for producing solutions having a resistivity below about $10^8$.

Examples of insecticides suitable for use in the solutions of the invention are listed below in Table I. In general, the presence of one or more asymmetric carbon atoms, as well as of a cyclopropane ring and (in some cases) a carbon-carbon double bond in these insecticides leads to the possibility of a number of different stereoisomers and geometrical isomers. The invention visualises using both pure isomers and mixtures of isomers, the former being potentially more active, the latter cheaper.

TABLE I

| Compound No. | Common Name | R | $R^1$ | X | Y | Z |
|---|---|---|---|---|---|---|
| 1 | permethrin | H | (ii) | – | H | $-CH=CCl_2$ |
| 2 | cypermethrin | CN | (ii) | – | H | $-CH=CCl_2$ |
| 3 | decamethrin | CN | (ii) | – | H | $-CH=CBr_2$ |
| 4 | | H | (i) | p-Cl | – | – |
| 5 | | H | (ii) | – | H | $-CH=C(CF_3)_2$ |
| 6 | | CN | (ii) | – | H | $-CH=C(CF_3)_2$ |
| 7 | | H | (ii) | – | H | $-CH=C(CF_3)Cl$ |
| 8 | | CN | (ii) | – | H | $-CH=C(CF_3)Cl$ |
| 9 | | H | (ii) | – | H | $-CH=C(CF_3)Br$ |
| 10 | | CN | (ii) | – | H | $-CH=C(CF_3)Br$ |
| 11 | phenothrin | H | (ii) | – | H | $-CH=C(CH_3)_2$ |

Preferably the concentration of active ingredient is not more than 10% by weight of the solution. If desired, the solutions of the invention may additionally contain quantities of other active ingredients dissolved therein.

The following Examples illustrate the invention.

The following names used in the specification and Examples are Registered Trade Marks: "Solvesso"; "Isopar"; "Exsol"; "Hyvis"; "Cerechlor"; "Aromasol".

Example 1

The following solution was made by mixing together the constituents.

| Ingredient | Parts by Weight |
|---|---|
| Technical permethrin | 50 |
| "Solvesso" 150 | 350 |
| Cyclohexanone | 100 |
| "Cerechlor" C42 | 500 |

Viscosity 21.2 centistokes; resistivity $1.2 \times 10^8$ ohm centimetres (both measured at 20°C).

This solution was tested in the device illustrated in figures 1—3 of UK Patent No 1569707, and atomised very satisfactorily.

Example 2

A formulation ("Formulation A") of permethrin was prepared suitable for ultra-low volume spraying. This had the following composition:

| Constituent | Parts by Weight |
|---|---|
| Permethrin | 50 |
| Cotton seed oil | 200 |
| "Isopar" L (trade name for a high-boiling paraffin fraction) | 750 |
| | 1000 |

Formulation A had a viscosity of 7.0 centistokes and a resistivity of $10^{11}$ ohm cm. Attempts to spray it through the device illustrated in figurs 1—3 of UK Patent No 1569707 were unsuccessful. The formulation was therefore modified to give a composition according to the invention, by mixing the following ingredients.

| Constituent | Parts by Weight |
|---|---|
| Formulation A | 700 |
| "Cerechlor" C48 | 290 |
| ASA-3 (antistatic additive) | 10 |
| | 1000 |

The modified composition had a viscosity of 19.5 centistokes and a resistivity of $2.4 \times 10^8$ ohm cm, and sprayed very satisfactorily through the aforesaid device.

Example 3

The following solution was made by mixing together the constituents.

| Ingredient | Parts by Weight |
|---|---|
| Technical cypermethrin | 12.5 |
| *n*-butanol | 220 |
| 'Solvesso' 100 | 150 |
| Cotton seed oil | to 1000 |

Viscosity 11.0 centistokes; resistivity $5.4 \times 10^7$ ohm centimetres (both measured at 20°C). This solution atomised satisfactorily when tested as in Example 1.

Example 4

The following solution is made by mixing together the constituents:

| Ingredient | Parts by Weight |
|---|---|
| Compound No 8 of Table I (mixture of isomers) | 15 |
| *n*-butanol | 220 |
| 'Solvesso' 100 | 150 |
| Cotton seed oil | to 1000 |

Viscosity 11 centistokes; resistivity 5.4 x $10^7$ ohm centimetres (both at 20°C). This solution atomises satisfactorily when tested as in Example 1.

Examples 5-11

Seven compositions according to the invention were prepared from cypermethrin (compound No 2 of Table I) by mixing together the constituents. In each case the resulting solution atomised satisfactorily when tested as in Example 1. The cypermethrin used was a technical grade mixture of isomers supplied as a 34% solution in 'Aromasol' H hydrocarbon solvent. Viscosity data are given in centistokes and resistivities in ohm centimetres.

Example 5

| Ingredient | Parts by Weight |
|---|---|
| Cypermethrin | 12.5 |
| 'Aromasol' H | 25 |
| *n*-butanol | 220 |
| 'Solvesso' 100 | 150 |
| Cotton seed oil | 592.5 |
| | 1000 |

Properties at 20°C: Viscosity 11.0; Resistivity 5.4 x $10^7$; Density 0.886.

Example 6

| Ingredient | Parts by Weight |
|---|---|
| Cypermethrin | 12.5 |
| 'Aromasol' H | 25 |
| *n*-butanol | 220 |
| 'Isopar' L | 150 |
| Cotton seed oil | 592.5 |
| | 1000 |

Properties at 20°C: Viscosity 12.4; Resistivity 6.0 x $10^7$; Density 0.862.

Example 7

| Ingredient | Parts by Weight |
|---|---|
| Cypermethrin | 12.5 |
| 'Aromasol' H | 25 |
| Cyclohexanone | 220 |
| 'Isopar' L | 150 |
| Cotton seed oil | 592.5 |
| | 1000 |

Properties at 20°C: Viscosity 15; Resistivity 4.6 x $10^7$; Density 0.896.

Example 8

| Ingredient | Parts by Weight |
|---|---|
| Cypermethrin | 12.5 |
| 'Aromasol' H | 25 |
| 'Isopar' L | 150 |
| ASA 3 | 175 |
| Cotton seed oil | 637.5 |
| | 1000 |

Properties at 20°C: Viscosity 50; Resistivity 4.7 × $10^7$; Density 0.898.

Example 9

| Ingredient | Parts by Weight |
|---|---|
| Cypermethrin | 12.5 |
| 'Aromasol' H | 25 |
| 'Exsol' D180/220 | 150 |
| ASA 3 | 175 |
| Cotton seed oil | 637.5 |
| | 1000 |

Properties at 20°C: Viscosity 43; Resistivity 4.7 × $10^7$; Density 0.898.

Example 10

| Ingredient | Parts by Weight |
|---|---|
| Cypermethrin | 12.5 |
| 'Aromasol' H | 25 |
| Cyclohexanone | 220 |
| 'Isopar' L | 150 |
| Cotton seed oil | 592.5 |
| | 1000 |

Properties at 20°C: Viscosity 7; Resistivity 5.0 × $10^7$; Density 0.851.

Example 11

| Ingredient | Parts by Weight |
|---|---|
| Cypermethrin | 12.5 |
| 'Aromasol' H | 25 |
| 'Hyvis' 30 | 100 |
| 'Isopar' L | 200 |
| White Oil | 442.5 |
| Cyclohexanone | 220 |
| | 1000 |

Properties at 20°C: Viscosity 10; Resistivity 5.1 × $10^7$; Density 0.856.

## Claims

1. An electrostatically sprayable insecticidal formulation suitable for use in an electrostatic spraying apparatus to spray plants to give an even coating of the insecticide on the leaves of said plants, the formulation having a viscosity at 20°C in the range 1 to 50, preferably 5 to 25, centistokes, and capable of producing after spraying a spray droplet size in the range of 50 to 200 $\mu$m in diameter, and characterised by comprising a solution of 0.5 to 50% by weight of an insecticide in an inert organic solvent medium, said medium being a mixture of inert solvents optionally containing an antistatic agent, formulated so that the formulation has a resistivity at 20°C of $1 \times 10^6$ to $1 \times 10^{10}$ ohm centimetres, the insecticide being of formula:

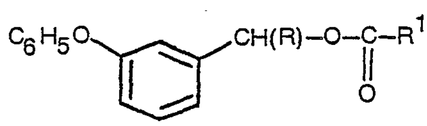

where R is hydrogen or cyano, and $R^1$ is

(i) a group of formula:

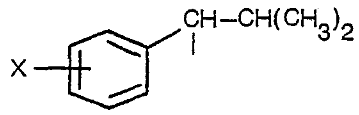

where X is selected from hydrogen, chlorine and methyl, or

(ii) a group of formula:

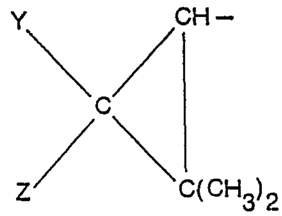

where Y and Z are halogen or methyl, or Y is hydrogen and Z is methyl, or a group of formula $R^2R^3C{=}CH$—, where $R^2$ and $R^3$, which may be the same or different, are chlorine, bromine, methyl, ethyl, halo-substituted methyl or halo-substituted ethyl.

2. An electrostatically sprayable insecticidal formulation according to claim 1 characterised by comprising a solution of 0.5 to 10% by weight of an insecticide which is permethrin or cypermethrin in an organic solvent medium comprising 15 to 25% of an alcoholic or ketonic solvent, 10 to 20% by weight of a hydrocarbon solvent and 55 to 65% by weight of cottonseed oil, the formulation having a resistivity at 20°C of $1 \times 10^6$ to $5 \times 10^8$ ohm centimetres.

3. A method of treating a plant infested by insects, characterised by electrostatically spraying the plant with a formulation according to claim 1 or 2.

## Patentansprüche

1. Elektrostatisch verspritzbare insecticide Formulierung, die sich zum Bespritzen von Pflanzen in einer elektrostatischen Spritzvorrichtung eignet, um auf den Blättern der Pflanzen einen gleichmäßigen Belag des Insecticids zu bilden, wobei die Formulierung bei 20°C eine Viskosität im Bereich von 1 bis 50 Centistoke, vorzugsweise 5 bis 25 Centistoke, aufweist und nach dem Verspritzen eine Spritztröpfchengröße im Bereich von 50 bis 200 $\mu$m Durchmesser bilden kann, dadurch gekennzeichnet, daß sie aus einer Lösung von 0,5 bis 50 Gew.% eines Insecticids in einem inerten organischen Lösungsmittelmedium besteht, wobei das Medium ein Gemisch aus inerten Lösungsmitteln ist, welches gegebenenfalls ein antistatisches Mittel enthält und so formuliert ist, daß die Formulierung bei 20°C einen spezifischen Widerstand von $1 \times 10^6$ bis $1 \times 10^{10}\Omega$ cm aufweist, und wobei das Insecticid die Formel

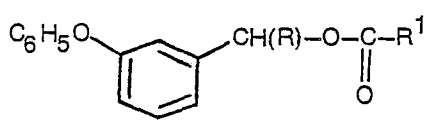

besitzt, worin R für Wasserstoff oder Cyano steht und $R^1$ für eine Gruppe einer der folgenden Formeln steht:

(i)

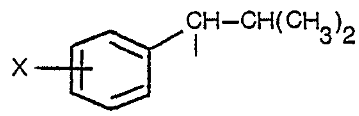

worin X ausgewählt ist aus Wasserstoff, Chlor und Methyl oder

(ii)

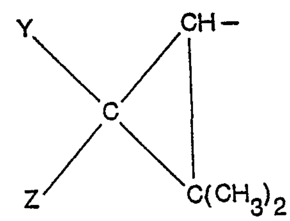

worin Y und Z für Halogen oder Methyl stehen oder Y für Wasserstoff steht und Z für Methyl oder eine Gruppe der Formel $R^2R^3C{=}CH$— steht, worin $R^2$ und $R^3$, welche gleich oder verschieden sein können, Chlor, Brom, Methyl, Äthyl, halogensubstituiertes Methyl oder halogensubstituiertes Äthyl darstellen.

2. Elektrostatisch verspritzbare insecticide Formulierung nach Anspruch 1, dadurch gekennzeichnet, daß sie aus einer Lösung von 0,5 bis 10 Gew.% eines Insecticids besteht, wobei es sich um Permethrin oder Cypermethrin in einem organischen Lösungsmittel handelt, welches 15 bis 25 Gew.% eines alkoholischen oder ketonischen Lösungsmittels, 10 bis 20 Gew.% eines Kohlenwasserstofflösungsmittels, und 55 bis 65 Gew.% Baumvollsamenöl enthält, wobei die Formulierung bei 20°C einen spezifischen Widerstand von $1 \times 10^6$ bis $5 \times 10^8$ Ω cm besitzt.

3. Verfahren zur Behandlung einer Pflanze, die von Insekten befallen ist, dadurch gekennzeichnet, daß die Pflanze mit einer Formulierung nach Anspruch 1 oder 2 elektrostatisch bespritzt wird.

**Revendications**

1. Formulation insecticide pulvérisable par des moyens électrostatiques, apte à être utilisée dans un appareil de pulvérisation électrostatique pour traiter des plantes par pulvérisation de manière à former sur leurs feuilles une couche uniforme de l'insecticide, cette formulation ayant une viscosité à 20°C dans l'intervalle de 1 à 50, notamment de 5 à 25 centistokes et étant capable de produire, après pulvérisation, des gouttelettes pulvérisées de diamètre compris dans l'intervalle de 50 à 200 $\mu$m, et caractérisée en ce qu'elle comprend une solution de 0,5 à 50% en poids d'un insecticide dans un milieu formé de solvants organiques inertes, ledit milieu étant un mélange de solvants inertes contenant éventuellement un agent antistatique, formulée de manière que la formulation ait une résistivité à 20°C de $1 \times 10^6$ à $1 \times 10^{10}$ ohms-centimètres, l'insecticide répondant à la formule:

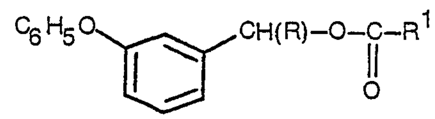

dans laquelle R est l'hydrogène ou le groupe cyano et $R^1$ représente

(i) un groupe de formule:

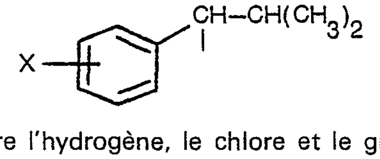

dans laquelle X est choisi entre l'hydrogène, le chlore et le groupe méthyle, ou

(ii) un groupe de formule:

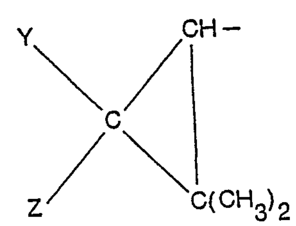

dans laquelle Y et Z représentent un halogène ou un groupe méthyle, ou bien Y est l'hydrogène et Z est un groupe méthyle ou un groupe de formule $R^2R^3C{=}CH$—, où $R^2$ et $R^3$, qui peuvent être égaux ou différents, représentent le chlore, le brome ou un groupe méthyle, éthyle, méthyle à substituant halogéno ou éthyle à substituant halogéno.

2. Formulation insecticide apte à être pulvérisée par des moyens électrostatiques suivant la revendication 1, caractérisée en ce qu'elle comprend une solution de 0,5 à 10% en poids d'un insecticide qui est la perméthrine ou la cyperméthrine dans un milieu formé de solvants organiques comprenant 15 à 25% d'un solvant alcoolique ou cétonique, 10 à 20% en poids d'un solvant hydrocarboné et 55 à 65% en poids d'huile de graines de cotonnier, la formulation ayant une résistivité à 20°C de $1 \times 10^6$ à $5 \times 10^8$ ohms-centimètres.

3. Procédé de traitement d'une plante infestée par des insectes, caractérisé par la pulvérisation électrostatique sur la plante d'une formulation suivant la revendication 1 ou 2.